# EUROPÄISCHE PATENTANMELDUNG

(11) **EP 1 216 789 A2**
(43) Veröffentlichungstag der Anmeldung: **26.06.2002**
(21) Anmeldenummer: 01120955.8
(22) Anmeldetag: 31.08.2001
(51) Int. Cl.: B23Q 1/66, B23Q 39/00, B23Q 39/02

(54) **Vertikaldrehmaschine**

(30) Priorität: 22.12.2000 DE 10064410; 10.04.2001 DE 10117984
(71) Anmelder: Hüller Hille GmbH, 71636 Ludwigsburg (DE)
(72) Erfinder: Kellert, Hans-Dieter, 65232 Taunusstein (DE); Lange, Werner, 65597 Hünfelden (DE); Lindner, Dietmar, 65597 Hünfelden (DE)
(74) Vertreter: Dahlkamp, Heinrich-Leo, Dipl.-Ing.

(57) **Zusammenfassung**

Eine Vertikaldrehmaschine hat zwei vertikal angeordnete Werkstückspindeln (12, 13) und zwei Werkzeugträger (7, 8), welche auf Führungen (5, 6; 2) in Z-Richtung und X-Richtung verfahrbarer Kreuzschlitten (3, 4) angeordnet sind. Die Werkstückspindeln (12, 13) sind auf einem Führungsträger (9) derart verfahrbar, dass sie aus einem Arbeitsbereich (20) heraus horizontal in Y-Richtung quer zur horizontalen Verfahrbarkeit des Werkzeugträgers (7, 8) verfahren werden können.

## Beschreibung

Die Erfindung betrifft eine Vertikaldrehmaschine mit zwei vertikal angeordneten Werkstückspindeln und zumindest einem Werkzeugträger, der auf einem auf Führungen in Z-Richtung und X-Richtung verfahrbaren Kreuzschlitten angeordnet ist.

Eine Vertikaldrehmaschine der vorstehenden Art ist Gegenstand der GB 2 095 138 A1. Bei der in dieser Schrift beschriebenen Drehmaschine sind zwei in X-Richtung verfahrbare Kreuzschlitten mit jeweils einem Revolverkopf als Werkzeugträger vorgesehen. Zusätzlich zu Werkzeugen trägt jeder Revolverkopf einen Werkstückgreifer. Die in X-Richtung verlaufende Führung der beiden Kreuzschlitten ist so lang, dass jeder Werkstückgreifer Werkstücke zwischen einer Seite der Vertikaldrehmaschine und den Werkstückspindeln wechseln kann. Weiterhin ermöglichen es die Werkstückgreifer, die Werkstücke von einer Werkstückspindel zur anderen zu wechseln. Die beiden Werkstückspindeln dieser Vertikaldrehmaschine arbeiten stets gleichzeitig. Wenn bei der Vertikaldrehmaschine ein Spannmittel einer Werkstückspindel gewechselt werden muss, dann ist es erforderlich, dass die Vertikaldrehmaschine während dieser Zeit stillsteht, da sich beide Werkstückspindeln stets im Arbeitsbereich der Maschine befinden. Solche Stillstandszeiten treten auch ein, wenn man von Hand Werkstücke wechseln will.

Wie die FR 2 602 703 A1 zeigt, ist es zur Reduzierung der zum Werkstückwechsel erforderlichen Nebenzeit bei Horizontaldrehmaschinen bekannt, auf einer in X-Richtung verlaufenden Führung zwei unabhängig voneinander verfahrbare Werkstückspindeln anzuordnen, die wahlweise vor einen Werkzeugträger gefahren werden können. Hierdurch hat man die Möglichkeit, während ein Werkstück der einen Werkstückspindel bearbeitet wird, die andere Werkstückspindel aus dem Arbeitsbereich der Drehmaschine heraus zu fahren und bei ihr das Werkstück zu wechseln.

Der Erfindung liegt das Problem zugrunde, eine Vertikaldrehmaschine der eingangs genannten Art so auszubilden, dass für ein eventuell erforderlich werdendes Umrüsten der Werkstückspannmittel möglichst geringe Verluste der Maschinenlaufzeit eintreten.

Dieses Problem wird erfindungsgemäß dadurch gelöst, dass die Werkstückspindeln aus einem Arbeitsbereich heraus horizontal in Y-Richtung quer zur horizontalen Verfahrbarkeit des Werkzeugträgers verfahrbar angeordnet sind.

Bei einer solchen Vertikaldrehmaschine sind im Gegensatz zu der eingangs erörterten GB 2 095 138 die Werkstückspindeln in Richtung einer dritten Achse verfahrbar angeordnet. Dadurch genügen relativ kurze Verfahrwege, um die Werkstückspindeln aus dem Arbeitsbereich der Vertikaldrehmaschine heraus zu bewegen, so dass ein Wechsel der Spannmittel und/oder des Werkstückes möglich ist, während zugleich auf der anderen Werkstückspindel ein Werkstück bearbeitet wird. Durch die Verfahrbarkeit in Y-Richtung lässt sich jede der Werkstückspindeln unabhängig von der anderen in einen Bereich verfahren, der von keinerlei Maschineneinrichtungen eingeengt wird. Deshalb ist dort auch ein Wechsel von Spannmitteln der Werkstückspindeln möglich. Die Erfindung ermöglicht somit ein Umrüsten der Maschine ohne einen Maschinenlaufzeitverlust.

Der Wechsel der Spannmittel und der Werkstücke ist besonders einfach möglich, wenn gemäß einer vorteilhaften Weiterbildung der Erfindung die Werkstückspindeln stehend angeordnet sind.

Grundsätzlich ist es denkbar, die beiden Werkstückspindeln auf einer gemeinsamen Führung anzuordnen, welche die X-Führung kreuzt und deshalb von einer Seite der Vertikaldrehmaschine zur anderen führt. Die Werkstückspindel, an der jeweils ein Werkstückwechsel vorgenommen werden soll, befände sich dann abwechselnd vor oder hinter der Vertikaldrehmaschine. Die beiden Werkstückspindeln gelangen jedoch zum Werkstückwechsel stets zur gleichen Seite der Vertikaldrehmaschine, wenn gemäß einer anderen Weiterbildung der Erfindung zur Verfahrbarkeit der Werkstückspindeln an einer Seite der Vertikaldrehmaschine ein sich in Y-Richtung erstreckender Führungsträger angeordnet ist, der an seinen gegenüberliegenden Seiten in Y-Richtung verlaufende Führungen aufweist, auf denen jeweils eine der Werkstückspindeln gehalten ist.

Unterschiedliche Werkzeuge können besonders rasch hintereinander eingesetzt werden, ohne dass eine Kollisionsgefahr mit den Werkzeugen besteht, wenn zwei unabhängig voneinander verfahrbare Werkzeugträger auf jeweils einem Kreuzschlitten auf einer in X-Richtung verlaufenden Führung vorgesehen sind.

Eine andere, besonders vorteilhafte Weiterbildung der Erfindung besteht darin, dass die in X-Richtung verlaufende Führung des Kreuzschlittens den Arbeitsbereich der Vertikaldrehmaschine zu beiden Seiten hin jeweils bis über eine Werkstücktransporteinrichtung überragt und die Kreuzschlitten jeweils einen Greifer zum Transport der Werkstücke zwischen den Werkstücktransporteinrichtungen und den Werkstückspindeln aufweist. Durch eine solche Ausbildung kann man den Werkstückwechsel mittels des Werkzeuggreifers jeweils eines Werkzeugträgers automatisch vornehmen und hat zusätzlich die Möglichkeit, durch Verfahren der Werkstückspindeln in Y-Richtung Werkstücke oder Spannmittel von Hand auszutauschen, ohne dass hierbei Maschineneinrichtungen im Wege sind und ohne dass hierzu die Werkzeugmaschine stillstehen muss.

Wenn mit der Vertikaldrehmaschine beispielsweise in einer Stirnseite eines Werkstücks außermittige Bohrungen erzeugt werden sollen, kann man gemäß einer anderen Weiterbildung vorsehen, dass die Y-Achse NC-gesteuert ausgebildet ist. Eine solche Vertikaldrehmaschine ermöglicht zugleich Fräsarbeiten.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine teilweise geschnittene Vorderansicht einer Vertikaldrehmaschine nach der Erfindung,
- Fig.2: eine Draufsicht auf die Vertikaldrehmaschine,
- Fig.3: eine Seitenansicht der Vertikaldrehmaschine.

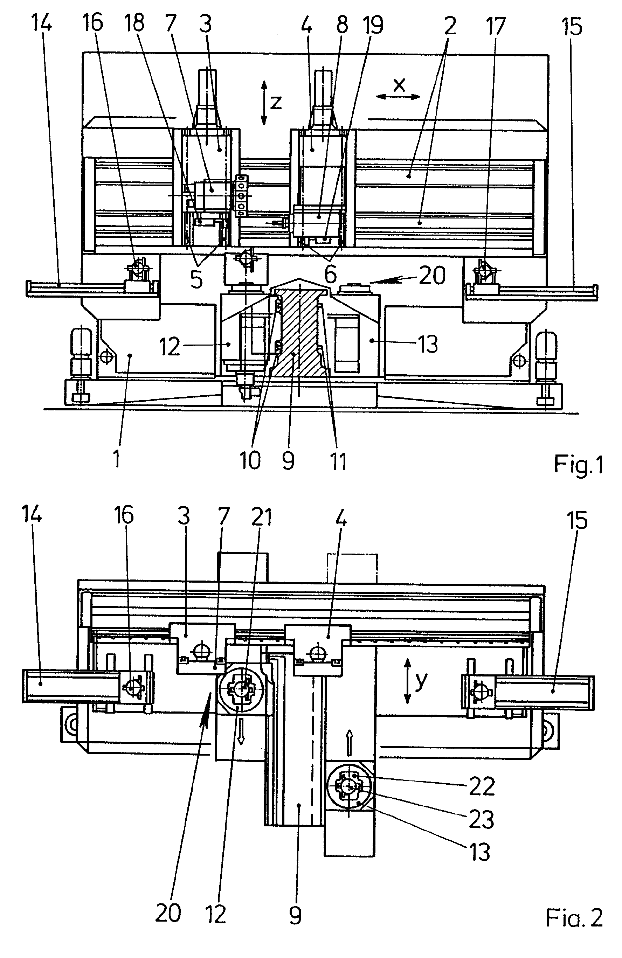

Die Figur 1 zeigt von einer Vertikaldrehmaschine ein Maschinenbett 1, welches eine in X-Richtung verlaufende Führung 2 hat. Auf dieser Führung 2 sind zwei Kreuzschlitten 3, 4 in X-Richtung verfahrbar angeordnet. Jeder Kreuzschlitten 3, 4 hat eine in Z-Richtung verlaufende Führung 5, 6, so dass Werkzeugträger 7, 8 in X- und Z-Richtung verfahren werden können. Zusätzlich tragen die beiden Kreuzschlitten 3, 4 jeweils einen Werkstückgreifer 18, 19.

Die Vertikaldrehmaschine hat weiterhin einen aus der Bildebene heraus nach vorn, also in Y-Richtung, ragenden Führungsträger 9, der an jeder Seite jeweils eine Führung 10, 11 aufweist, auf der jeweils eine Werkstückspindel 12, 13 verfahrbar angeordnet ist.

Die in X-Richtung verlaufende Führung 2 führt zu beiden Seiten hin jeweils aus einem Arbeitsbereich 20 der Vertikaldrehmaschine heraus bis über eine Werkstücktransportvorrichtung 14, 15 für Werkstücke 16, 17.

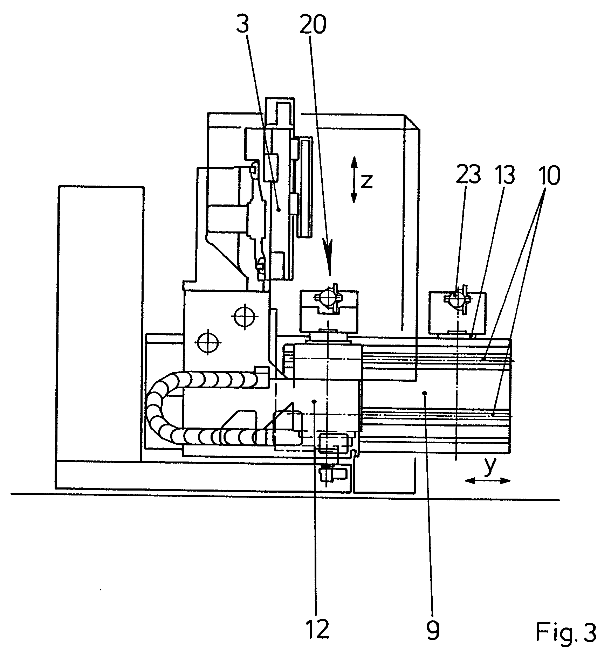

Die Draufsicht gemäß Figur 2 zeigt, dass eine Werkstückspindel 13 entlang des Führungsträgers 9 aus dem Arbeitsbereich 20 heraus bis in eine Ruheposition verfahren wurde. Die andere Werkstückspindel 12 befindet sich innerhalb des Arbeitsbereiches 20 in Arbeitsposition, so dass der Kreuzschlitten 3 mit seinem Werkzeugträger 7 zur Bearbeitung eines Werkstückes 21 bereit ist. Sobald das Werkstück 21 fertig bearbeitet ist, kann es mittels des in Figur 1 gezeigten Werkstückgreifers 18 zur Werkstücktransportvorrichtung 14 transportiert und gegen ein neues Werkstück 16 ausgetauscht werden.

Die Werkstückspindel 13 befindet sich so weit außerhalb des Arbeitsbereiches 20, dass man an ihr gefahrlos beispielsweise Spannmittel 22 wechseln oder von Hand ein einzelnes Werkstück 23 einsetzen kann.

Die Figur 3 zeigt den Führungsträger 9 mit den Führungen 10, auf welchen die Werkstückspindel 12 verfahrbar ist. Die andere Werkstückspindel 13 befindet sich in Figur 3 gesehen hinter dem Führungsträger 9, so dass nur ihr oberes Ende zu sehen ist. Ebenfalls zu erkennen ist in der Figur 3 der Kreuzschlitten 3.

Die Funktionsweise der erfindungsgemäßen Vertikaldrehmaschine ist am raschesten der Figur 3 zu entnehmen. Zu erkennen ist, dass sich die Werkstückspindel 13 außerhalb des Arbeitsbereiches 20 der Vertikaldrehmaschine befindet. Deshalb kann an der Werkstückspindel 13 beispielsweise das Spannmittel gewechselt oder von Hand das Werkstück 23 aufgespannt werden. Diese Arbeiten können erfolgen, während an der Werkstückspindel 12 eine Drehbearbeitung erfolgt.

### Bezugszeichenliste

- 1: Maschinenbett
- 2: Führung
- 3: Kreuzschlitten
- 4: Kreuzschlitten
- 5: Führung

- 6: Führung
- 7: Werkzeugträger
- 8: Werkzeugträger
- 9: Führungsträger
- 10: Führung

- 11: Führung
- 12: Werkstückspindel
- 13: Werkstückspindel
- 14: Werkstücktransportvorrichtung
- 15: Werkstücktransportvorrichtung

- 16: Werkstück
- 17: Werkstück
- 18: Werkstückgreifer
- 19: Werkstückgreifer
- 20: Arbeitsbereich

- 21: Werkstück
- 22: Spannmittel
- 23: Werkstück

## Patentansprüche

1. Vertikaldrehmaschine mit zwei vertikal angeordneten Werkstückspindeln (12, 13) und zumindest einem Werkzeugträger (7, 8), der auf einem auf Führungen (5, 6; 2) in Z-Richtung und X-Richtung verfahrbaren Kreuzschlitten (3, 4) angeordnet ist, **dadurch gekennzeichnet, dass** die Werkstückspindeln (12, 13) aus einem Arbeitsbereich (20) heraus horizontal in Y-Richtung quer zur horizontalen Verfahrbarkeit des Werkzeugträgers (7, 8) verfahrbar angeordnet sind.

2. Vertikaldrehmaschine nach Anspruch 1, **dadurch gekennzeichnet, dass** die Werkstückspindeln (12, 13) stehend angeordnet sind.

3. Vertikaldrehmaschine nach den Ansprüchen 1 oder 2, **dadurch gekennzeichnet, dass** zur Verfahrbarkeit der Werkstückspindeln (12, 13) an einer Seite der Vertikaldrehmaschine ein sich in Y-Richtung erstreckender Führungsträger (9) angeordnet ist, der an seinen gegenüberliegenden Seiten in Y-Richtung verlaufende Führungen (10, 11) aufweist, auf denen jeweils eine der Werkstückspindeln (12, 13) gehalten ist.

4. Vertikaldrehmaschine nach zumindest einem der vorangehenden Ansprüche, **dadurch gekennzeichnet, dass** zwei unabhängig voneinander verfahrbare Werkzeugträger (7, 8) auf jeweils einem Kreuzschlitten (3, 4) auf einer in X-Richtung verlaufenden Führung (2) vorgesehen sind.

5. Vertikaldrehmaschine nach Anspruch 4, **dadurch gekennzeichnet, dass** die in X-Richtung verlaufende Führung (2) der Kreuzschlitten (3, 4) den Arbeitsbereich (20) der Vertikaldrehmaschine zu beiden Seiten hin jeweils bis über eine Werkstücktransporteinrichtung (14, 15) überragt und die Kreuzschlitten (3, 4) jeweils einen Werkstückgreifer (18, 19) zum Transport der Werkstücke (16, 17) zwischen den Werkstücktransporteinrichtungen (14, 15) und den Werkstückspindeln (12, 13) aufweist.

6. Vertikaldrehmaschine nach zumindest einem der vorangehenden Ansprüche, **dadurch gekennzeichnet, dass** die Y-Achse NC-gesteuert ausgebildet ist.
